# EUROPÄISCHE PATENTSCHRIFT

(11) **EP 2 191 975 B1**
(45) Veröffentlichungstag und Bekanntmachung des Hinweises auf die Patenterteilung: **16.10.2013**
(21) Anmeldenummer: 09176048.8
(22) Anmeldetag: 16.11.2009
(51) Int. Cl.: B41M 5/24, C03C 17/32, C03C 17/00

(54) **Verfahren zum Markieren oder Beschriften eines Werkstücks**
Method for marking or labelling a workpiece
Procédé de marquage ou d'inscription d'une pièce à usiner

(30) Priorität: 01.12.2008 DE 102008059756
(43) Veröffentlichungstag der Anmeldung: 02.06.2010
(73) Patentinhaber: tesa SE, 20253 Hamburg (DE)
(72) Erfinder: Koops, Arne, 23881, Neu-Lankau (DE); Reiter, Sven, 22049, Hamburg (DE); Lühmann, Dr. Bernd, 22844, Norderstedt (DE)

(56) Entgegenhaltungen:
- EP-A1- 1 431 057
- DE-T2- 69 607 336
- US-A- 5 171 650
- US-A- 5 987 920
- US-A1- 2003 127 441
- S. I. BLOKHINA ET AL.: "Use of the YuS-76 Equipment for Studying the Quality of Flat Glass" GLASS AND CERAMICS, Bd. 39, Nr. 1, Januar 1982 (1982-01), Seiten 15-17, XP002571961 ISSN: 0361-7610

## Beschreibung

Die vorliegende Erfindung betrifft ein Verfahren zum Markieren oder Beschriften eines Werkstücks mit energiereicher Strahlung, insbesondere mit einem Laserstrahl, wobei das Werkstück eine lichtstreuende Oberfläche aufweist und das Material des Werkstücks für die Strahlungswellenlänge transparent ist, und wobei eine Polymermatrix derart am Werkstück angeordnet wird, dass die Strahlung das Werkstück und dessen lichtstreuende Oberfläche durchläuft, bevor sie auf die Polymermatrix trifft.

Es ist bekannt, dass die Verwendung einer Laserstrahlung zur Materialbearbeitung eines Werkstücks grundlegend auf einer Absorption der Strahlung und einer Energieumwandlung mit nachfolgenden Prozessen wie Verdampfen, Ionisieren, partikulärem Abtragen und photochemischen Vorgängen basiert. Dabei können diese Prozesse im Werkstück selbst stattfinden, sodass Markierungen oder Beschriftungen beispielsweise in Form einer Gravur erzielt werden, oder ein anderes Material lokal auf dem Werkstück abgeschieden wird, beispielsweise im Rahmen von Laserstrahlverdampfen (engl.: pulsed laser deposition, PLD). Varianten des Laserstrahlverdampfens finden insbesondere bei Werkstücken statt, deren Material transparent für die Wellenlänge der verwendeten Laserstrahlung ist.

Die optischen Eigenschaften eines Werkstoffes können durch den Transmissionsgrad T, den Reflexionsgrad R und dem Absorptionsgrad A beschrieben werden, die als Funktion der Wellenlänge zu betrachten sind. Typischerweise durchläuft der Laserstrahl bis zum Bearbeitungsort das Medium Luft und trifft dann auf die Oberfläche eines Werkstücks. Es ist dabei bekannt, dass die Laserenergie nur zu einem bestimmten Teil in einen Werkstoff eingekoppelt wird. Diese Verluste treten vorwiegend durch Reflexion und Streuung der Laserstrahlung an der Oberfläche des zu bearbeitenden Werkstoffes auf. Resultierend daraus wird nur ein Teil des Laserstrahls für den gewünschten Prozess bereitgestellt bzw. durch Streuung wieder ausgekoppelt oder in unerwünschte Werkstückbereiche abgelenkt.

Besonders Werkstoffe mit metallischen Eigenschaften besitzen einen hohen Reflexionsgrad über einen großen Wellenlängenbereich, der die Bearbeitung erschwert und Prozessstellgrößen wie Leistung, Wellenlänge, Pulslänge und Einwirkdauer entsprechend genau eingestellt werden müssen, um ein Werkstück mit metallischen Eigenschaften bearbeiten zu können.

Zur Betrachtung der optischen Eigenschaften wird zwischen dem Verhalten an der Grenzfläche zwischen zwei Medien sowie dem Verhalten in dem Medium unterschieden. An einer ebenen Grenzfläche zwischen zwei Medien kann das Laserlicht transmittiert und/oder reflektiert werden. Im Medium selbst kann es zur Absorption oder zur vollständigen Transmission kommen, sofern es sich z.B. bei dem Werkstück um ein Glassubstrat handelt, welches die Wellenlänge des Lichtes nicht absorbiert.

Wenn aber Grenzflächen in einer mikroskopischen Struktur vorliegen, in dem diese wie eine Sammel- oder Streulinse wirken, kann das Laserlicht eine Änderung seines Weges erfahren. Im Mikrometerbereich raue Oberflächen erzeugen ebenfalls nicht unerhebliche diffuse Reflexionen.

Insgesamt stören diese optischen Phänomene die Lichteinkopplung in den Werkstoff und können damit das Bearbeitungsergebnis erheblich verschlechtern. Besonders hochreflektierende Materialien mit hohen Bearbeitungsschwellen können nur mit extrem leistungsstarken Lasern bearbeitet werden. Aber auch Materialien, die mit dem Laser durchstrahlt werden, wie etwa Optiken, ändern die Qualität des Laserstrahls und führen dann zu schlechten Ergebnissen bei der weiteren Verwendung.

Bei einem Werkstück aus Glas finden häufig zur Reduzierung einer Reflexion von sichtbaren Wellenlängen Anti-Reflexionsbeschichtungen Einsatz, die in der Bauarchitektur bei Glasscheiben, aber auch bei Brillengläsern Verwendung finden.

Es ist allgemein bekannt, dass raue Oberflächen das Licht in alle Richtungen reflektieren. Eine Oberfläche ist als optisch glatt zu beschreiben, wenn die Rauheiten deutlich kleiner sind als die Wellenlänge λ des beaufschlagten Lichts. Ist aber die Rauheit größer als die Wellenlänge λ, wird die Oberfläche als optisch rau bezeichnet. Beispielsweise erscheint ein Glas mit optisch rauer Oberfläche als undurchsichtig, obwohl das Glas aufgrund seiner sonstigen optischen Eigenschaften transparent sein würde.

Da für die Bearbeitung von Glas mittels Laserstrahlung möglichst wenig Laserstrahlung das Glas transmittieren sollte, wird Glas häufig mit einem CO₂-Laser bearbeitet, da Glas für infrarote Wellenlängen um 10,6 µm nicht transluzent ist. Infolgedessen wird die Laserstrahlung im Glas absorbiert und führt zur Einkopplung von Strahlungsenergie und somit zur Aufheizung des Werkstücks. Dieser Umstand führt dazu, dass die Wellenlänge 10,6 µm bei den Bearbeitungsprozessen wie Schneiden und Bohren für Glas Verwendung findet.

Bei Verwendung eines Feststoffkörperlaser mit einer Wellenlänge von 1064 nm besitzt Glas zwar einen extrem niedrigen Absorptionsgrad, sodass diese Laserstrahlung das Glas grundsätzlich ohne strukturelle Auswirkung auf das Glas durchstrahlt. Kommt jedoch ein Glas mit einer optisch rauen Oberfläche zum Einsatz, dann wird der Laserstrahl zu einem nicht unerheblichen Teil an der rauen Grenzfläche gebrochen und nur ein gewisser Anteil dringt in das Glassubstrat ein und durchläuft dieses. Außerdem können Gläser zum Einsatz kommen, die eine Mikrostruktur besitzen, um energiereiches Licht einzufangen oder umzulenken.

Besonders bei Solarzellen werden Glasstrukturen als Solarzellenabdeckungen eingesetzt, die eine Verbesserung der Lichteinkopplung ermöglichen. Diese Technik wird als "light trapping" bezeichnet, da die einfallenden Photonen bis zu achtmal über die Struktur durch Reflexion zurückgeworfen und somit quasi "eingefangen" werden können. Betrachtet man die Struktur genauer, handelt es sich nach der geometrischen Optik um Konkavund Konvexlinsen, die als Streu- oder Sammellinse wirken. Weiterhin werden aber auch auf der Oberfläche Mikro- oder Nanopartikel aufgetragen, die das auftreffende Licht diffus reflektieren.

An jedem Auftreffpunkt des Lichtes auf solch einer optisch rauen Oberfläche gilt das Reflexionsgesetz. Dieses gilt auch für die Wellenlänge des Laserlichtes von 1064 nm, so dass der parallele Laserstrahl unkontrolliert gebrochen wird. Soll nun ein Werkstück mit einer solchen optisch rauen Oberfläche mit einem Laserstrahl mit einer Wellenlänge von 1064 nm beschriftet werden, müssen im Vergleich zu einem Werkstück mit optisch glatten Oberflächen höhere Laserleistungen verwendet werden, was zum einen das Verfahren ineffizienter macht und zum anderen schädigende Effekte am Werkstück durch Wärmeeinkopplung haben kann.

US-A-5 171 650 beschreibt ein Verfahren zum Beschriften eines Werkstücks mit einem Laserstrahl, wobei das Werkstück eine lichtstreuende Oberfläche aufweist und das Material des Werkstücks für die Strahlungswellenlänge transparent ist, und wobei eine Polymermatrix derart am Werkstück angeordnet wird, dass die Strahlung das Werkstück und dessen lichtstreuende Oberfläche durchläuft, bevor sie auf die Polymermatrix trifft.

Es ist daher die Aufgabe der vorliegenden Erfindung, ein Verfahren und eine Vorrichtung zum Markieren oder Beschriften eines Werkstücks mit energiereicher Strahlung, insbesondere mit einem Laserstrahl, bereitzustellen, bei dem die Einkopplung von Laserlicht über eine lichtstreuende, raue Oberfläche effizienter ist.

Diese Aufgabe wird durch ein erfindungsgemäßes Verfahren nach Anspruch 1 gelöst. Vorteilhafte Ausführungsformen sind Gegenstand der abhängigen Unteransprüche.

Gemäß einem ersten Aspekt der vorliegenden Erfindung wird ein Verfahren zum Markieren oder Beschriften eines Werkstücks mit energiereicher Strahlung, insbesondere mit einem Laserstrahl, bereitgestellt. Das Werkstück weist dabei eine lichtstreuende Oberfläche auf und das Material des Werkstücks ist für die Strahlungswellenlänge transparent. Eine Polymermatrix wird zudem derart am Werkstück angeordnet, dass die Strahlung das Werkstück und dessen lichtstreuende Oberfläche durchläuft, bevor sie auf die Polymermatrix trifft. Das Verfahren ist dadurch gekennzeichnet, dass die lichtstreuende Oberfläche des Werkstücks mit einem flüssigen oder viskoelastischen Medium benetzt wird.

Als Polymermatrix wird vorliegend jede Matrix basierend auf polymeren Bestandteilen bezeichnet. Neben den polymeren Bestandteilen kann die Matrix auch beliebige nicht polymere Bestandteile enthalten, wobei lediglich der Hauptbestandteil polymerer Art sein sollte. Insbesondere bezeichnet der Begriff "Polymermatrix" auch eine Mischung von Grundpolymeren. In besonders bevorzugter Ausgestaltung handelt es sich bei der Polymermatrix um eine duroplastische Polymermatrix. Es hat sich gezeigt, dass insbesondere Duroplaste besonders geeignet sind, um ein Werkstück zu markieren oder zu beschriften.

Durch die Benetzung der lichtstreuenden Oberfläche des Werkstücks mit einem flüssigen oder viskoelastischen Medium wird die Struktur der lichtstreuenden Oberfläche aufgefüllt, sodass die lichtstreuende, raue Oberfläche optisch glatt wird. Dadurch wird erreicht, dass die Reflexions- und Streuungscharakteristik der Oberfläche derart verändert wird, dass der Laserstrahl das Werkstück ohne störende Totalreflexion und mit einem erheblich verringerten Reflexionsgrad durchlaufen kann. Bei dem viskoelastischen Medium kann es sich beispielsweise um eine Klebmasse mit einem elastischen Folienträger handeln, wobei der elastische Folienträger die Polymermatrix darstellen kann.

Damit an den Grenzflächen zwischen Werkstück und dem Medium möglichst wenig Reflexion stattfindet, ist es vorteilhaft, wenn das flüssige oder viskoelastische Medium eine ähnliche Brechzahl wie das Material des Werkstücks hat.

Als Strahlungsquelle wird vorzugsweise ein Laser verwendet, der sich zum Markieren, Beschriften oder Gravieren von Werkstücken eignet. Dies ist beispielsweise ein fasergekoppelter Festkörper-Diodenlaser wie etwa ein FAYb-Faserlaser (Fiber Amplified Ytterbium) mit einer Wellenlänge von 1064 nm und einer mittleren Leistung von 12 bis 15 W. Da also Strahlung im Wellenlängenbereich von 600 nm - 1500 nm verwendet wird, ist es von Vorteil, wenn das flüssige oder viskoelastische Medium in dem Wellenlängenbereich von 600 nm - 1500 nm keine Absorption zeigt oder einen Absorptionsgrad von weniger als 10% hat. Dies gilt ebenso für das Material des Werkstücks, das vorzugsweise ein Glassubstrat ist.

Die lichtstreuende Oberfläche sollte vorteilhafterweise mit einer möglichst dünnen Schicht des flüssigen oder viskoelastischen Mediums benetzt werden, die gerade ausreicht, um die lichtstreuende, raue Oberfläche optisch zu glätten. Da es jedoch zu Verdunstung und Verdampfung des Mediums kommen kann, muss sichergestellt sein, dass während der Bestrahlung die lichtstreuende Oberfläche ausreichend benetzt ist. Es hat sich herausgestellt, dass dies je nach Anwendung und Rauheit der Oberfläche für Schichtdicken des flüssigen oder viskoelastischen Mediums von 250 nm - 10 mm der Fall ist. Es kann auch vorteilhaft sein, die lichtstreuende Oberfläche mehrmals zu benetzen oder ein kontinuierliches Benetzen durchzuführen.

In einer bevorzugten Ausführungsform des Verfahrens wird die Polymermatrix in Kontakt mit einer Oberfläche des Werkstücks angeordnet, die der lichtstreuenden Oberfläche gegenüberliegt. Die die benetzte Oberfläche und das Werkstück durchlaufende Strahlung kann dann an der angrenzenden Polymermatrix einen Materialabtrag hervorrufen, wodurch sich Bestandteile der Polymermatrix oder daraus entstehende Produkte als Markierung oder Beschriftung auf dem Werkstück abscheiden können. Vorzugsweise werden für die Markierung oder Beschriftung Produkte abgeschieden, die nach einer chemischen Reaktion aus Edukten entstehen, welche die Polymermatrix bereitstellt und durch den durch die Strahlung hervorgerufenen Materialabtrag für die Reaktion zur Verfügung gestellt werden. Die weitere Strahlung kann dann auch dazu verwendet werden, die chemische Reaktion in Gang zu setzen oder zu befördern.

Die Polymermatrix kann zum Beispiel einen Titanspender sowie einen Kohlenstoffspender aufweisen. Als Titanspender dient dabei reines Titan oder eine Titanverbindung, die eine Affinität hat, unter Energieeinwirkung kurzzeitig freies Titan als Edukt bereitzustellen. Gegebenenfalls kann die Bereitstellung des freien Titans auch über den Weg eines titanhaltigen Zwischenprodukts erfolgen. Der Kohlenstoffspender stellt insbesondere unter Energieeinstrahlung freien Kohlenstoff bereit. Bei dem Kohlenstoffspender kann es sich um eine Kohlenstoffverbindung und/oder um freien, nicht gebundenen Kohlenstoff handeln. Der Kohlenstoffspender kann dabei durch die Polymermatrix selbst bereitgestellt werden, es kann aber auch eine zusätzliche Kohlenstoffkomponente, beispielsweise in Form von Ruß, vorhanden sein. Zudem kann die Polymermatrix auch weitere Komponenten wie zum Beispiel Polymere, Absorber etc. enthalten. Durch die Strahlung kommt es zum Bereitstellen der Edukte Titan und Kohlenstoff, beispielsweise durch ein Aufbrechen einer Titanverbindung sowie einer Kohlenstoffverbindung, und es bildet sich unter Einwirkung von weiterer Strahlung als gewünschtes Produkt Titancarbid. Vorzugsweise wird bei lokaler Temperatur von 1700°C bis 2200°C Titandioxid mit Ruß oder reinstem Graphit zu Titancarbid und Kohlenmonoxid reduziert. Die Strahlung bewirkt dabei die für die Reaktion notwendige Temperatur.

Die Polymermatrix ist derart ausgebildet, dass sie auf die Laserbestrahlung überwiegend mit Pulverisierung reagiert, wodurch die einzelnen Edukte, insbesondere Titan und Kohlenstoff, freigesetzt werden und für die Reaktion zu Titancarbid zur Verfügung stehen. Das auf dem Werkstück abgeschiedene Titancarbid, welches im sichtbaren Wellenlängenbereich nicht transparent ist, dient dann als Markierung oder Beschriftung des Werkstücks.

Nach dem Markieren oder Beschriften ist es bevorzugt, das flüssige oder viskoelastische Medium von der lichtstreuenden Oberfläche wieder zu entfernen, da die optische Glättung der lichtstreuenden, rauen Oberfläche ggf. für nachfolgende Verwendungen des Werkstücks nicht erwünscht ist. Beispielsweise können Glasoberflächen von Solarzellenabdeckungen zur verbesserten Lichteinkopplung bewusst angeraut oder strukturiert sein.

Im Folgenden wird eine vorteilhafte Ausführungsform des erfindungsgemäßen Verfahrens anhand der beigefügten Figuren näher erläutert.
Fig. 1 zeigt die diffuse Reflexion eines Laserstrahls auf einer lichtstreuenden, rauen Oberfläche eines Werkstücks.
Fig. 2 verdeutlicht die Verminderung der diffusen Reflexion durch Benetzen der lichtstreuenden, rauen Oberfläche.

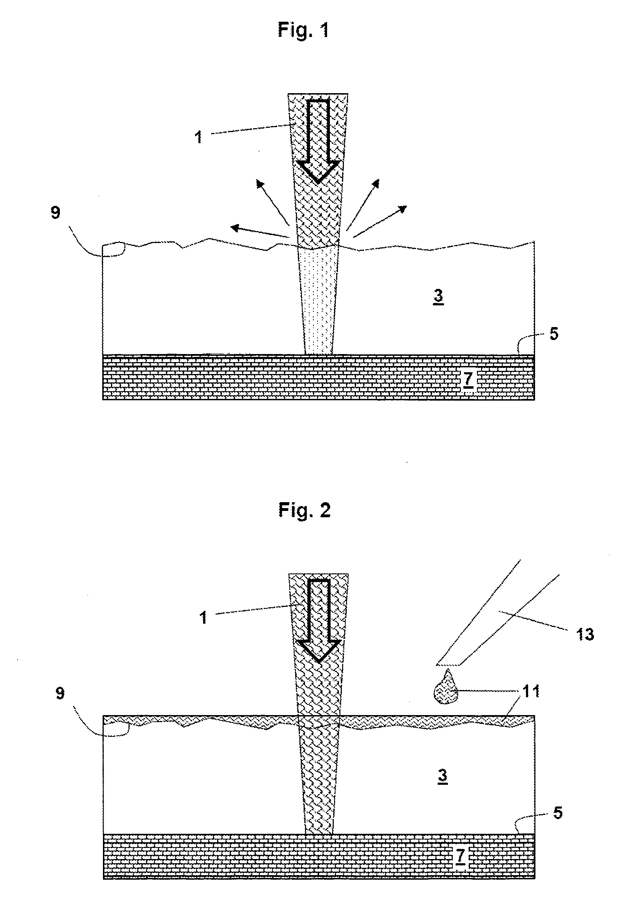

In Fig. 1 ist gezeigt wie ein Laserstrahl 1 auf ein Werkstück 3 gerichtet ist, das auf einer Oberfläche 5 markiert oder beschriftet werden soll. An der Oberfläche 5 des Werkstücks 3 ist eine Polymermatrix 7 angeordnet, die mit der Oberfläche 5 in Kontakt steht. Das Werkstück 3 ist für die Wellenlänge des Laserstrahls 1 transparent, wogegen die Polymermatrix 7 den Laserstrahl 1 hauptsächlich absorbiert. Der Laserstrahl 1 tritt über eine raue, lichtstreuende Oberfläche 9 des Werkstücks 3, die der zu markierenden Oberfläche 5 gegenüberliegt, in das Werkstück 3 ein, durchläuft es und trifft auf die Polymermatrix 7, die den Laserstrahl 1 absorbiert. Ein nicht unerheblicher Anteil des Laserstrahls 1 wird allerdings von der rauen, lichtstreuenden Oberfläche 9 des Werkstücks 3 nicht durchgelassen, sondern als diffuse Reflexion zurückgeworfen, was in Fig. 1 durch die radial angeordneten Pfeile angedeutet ist. Dadurch erreicht also nur ein Teil des Laserstrahls 1 die Polymermatrix 7. Die Leistungsdichte des Laserstrahls 1 kann dadurch innerhalb des Werkstücks 3 so stark verringert sein, dass ein für das Markieren oder Beschriften ausreichender Energieübertrag auf die Polymermatrix 7 nicht erzielt werden kann. Es kann dann keine Pulverisierung und Depolymerisation in der Polymermatrix 7 stattfinden, sodass sich keine Bestandteile der Polymermatrix oder daraus entstehende Produkte als Markierung oder Beschriftung auf der Oberfläche 5 des Werkstücks 3 abscheiden können. Es müsste dann die Leistung des Lasers erhöht werden, was das Verfahren ineffizienter machen würde und das Werkstück unnötigerweise und ggf. sogar schädigenderweise stärker aufheizen würde.

In Fig. 2 ist die Wirkung einer die raue, lichtstreuende Oberfläche 9 des Werkstücks 3 benetzenden Flüssigkeit 11, wie beispielsweise Wasser, gezeigt. Mit einer Spendereinheit 13 in Form einer Tülle, Pipette oder sonstigem Flüssigkeitsstutzen wird die Flüssigkeit 11 vor oder während des Markierens oder Beschriftens auf die raue, lichtstreuende Oberfläche 9 aufgetragen. Damit wird die Oberfläche 9 optisch geglättet, da die Flüssigkeit 11 eine ähnliche Brechzahl hat wie das Material des Werkstücks 3, das ein Glassubstrat ist. An der Grenzschicht zwischen Werkstück 3 und Flüssigkeit 11 treten dann keine diffusen Reflexionen auf.

Dadurch wird ein größerer Anteil des Laserstrahls 1 in das Werkstück 3 eingekoppelt, sodass das Verfahren effizienter ist und auch ohne Erhöhung der Laserleistung ein für das Markieren oder Beschriften ausreichender Energieübertrag auf die Polymermatrix 7 erzielt werden kann. Es findet dann nämlich durch die Einwirkung des Laserstrahls 1 eine lokale Pulverisierung und Depolymerisation in der Polymermatrix 7 statt, wobei sich Bestandteile der Polymermatrix oder daraus entstehende Produkte als Markierung oder Beschriftung auf der Oberfläche 5 des Werkstücks 3 abscheiden.

## Patentansprüche

1. Verfahren zum Markieren oder Beschriften eines Werkstücks (3) mit energiereicher Strahlung, insbesondere mit einem Laserstrahl (1), wobei das Werkstück (3) eine lichtstreuende Oberfläche (9) aufweist und das Material des Werkstücks (3) für die Strahlungswellenlänge transparent ist, und wobei eine Polymermatrix (7) derart am Werkstück (3) angeordnet wird, dass die Strahlung das werkstück (3) und dessen lichtstreuende Oberfläche (9) durchläuft, bevor sie auf die Polymermatrix (7) trifft, **dadurch gekennzeichnet, dass** die lichtstreuende Oberfläche (9) des Werkstücks (3) mit einem flüssigen oder viskoelastischen Medium (11) benetzt wird.

2. Verfahren nach Anspruch 1, wobei das flüssige oder viskoelastische Medium (11) eine ähnliche Brechzahl wie das Material des Werkstücks (3) hat.

3. Verfahren nach Anspruch 1 oder 2, wobei das flüssige oder viskoelastische Medium (11) in dem Wellenlängenbereich von 600 nm - 1500 nm keine Absorption zeigt oder einen Absorptionsgrad von weniger als 10% hat und Strahlung im Wellenlängenbereich von 600 nm - 1500 nm verwendet wird.

4. Verfahren nach einem der vorhergehenden Ansprüche, wobei die lichtstreuende Oberfläche (9) mit einer 250 nm - 10 mm dicken Schicht des flüssigen oder viskoelastischen Mediums (11) benetzt wird.

5. Verfahren nach einem der vorhergehenden Ansprüche, wobei das Material des Werkstücks (3) ein Glassubstrat ist, das in dem Wellenlängenbereich von 600 nm - 1500 nm keine Absorption zeigt oder einen Absorptionsgrad von weniger als 10% hat, und Strahlung im Wellenlängenbereich von 600 nm - 1500 nm verwendet wird.

6. Verfahren nach einem der vorhergehenden Ansprüche, wobei die Polymermatrix (7) in Kontakt mit einer Oberfläche (5) des Werkstücks (3) angeordnet wird, die der lichtstreuenden Oberfläche (9) gegenüberliegt.

7. Verfahren nach einem der vorhergehenden Ansprüche, wobei durch die Strahlung ein Materialabtrag an der Polymermatrix (7) hervorgerufen wird und sich daraus entstehende Produkte auf dem Werkstück (3) als Markierung oder Beschriftung abscheiden.

8. Verfahren nach einem der vorhergehenden Ansprüche, wobei das flüssige oder viskoelastische Medium (11) nach dem Markieren oder Beschriften von der lichtstreuenden Oberfläche (9) entfernt wird.

## Claims

1. Method of marking or inscribing a workpiece (3) with high-energy radiation, more particularly with a laser beam (1), the workpiece (3) having a light-scattering surface (9) and the material of the workpiece (3) being transparent for the radiation wavelength, and a polymer matrix (7) being disposed on the workpiece (3) in such a way that the radiation passes through the workpiece (3) and its light-scattering surface (9) before impinging on the polymer matrix (7), **characterized in that** the light-scattering surface (9) of the workpiece (3) is wetted with a liquid or viscoelastic medium (11).

2. Method according to Claim 1, wherein the liquid or viscoelastic medium (11) has a refractive index similar to that of the material of the workpiece (3).

3. Method according to Claim 1 or 2, wherein the liquid or viscoelastic medium (11) in the wavelength range of 600 nm-1500 nm exhibits no absorption or has a degree of absorption of less than 10%, and radiation in the wavelength range of 600 nm-1500 nm is used.

4. Method according to any of the preceding claims, wherein the light-scattering surface (9) is wetted with a 250 nm-10 mm layer of the liquid or viscoelastic medium (11).

5. Method according to any of the preceding claims, wherein the material of the workpiece (3) is a glass substrate which in the wavelength range of 600 nm-1500 nm exhibits no absorption or has a degree of absorption of less than 10%, and radiation in the wavelength range of 600 nm-1500 nm is used.

6. Method according to any of the preceding claims, wherein the polymer matrix (7) is disposed in contact with a surface (5) of the workpiece (3) which is opposite the light-scattering surface (9).

7. Method according to any of the preceding claims, wherein the radiation induces removal of material from the polymer matrix (7), and resultant products deposit on the workpiece (3) in the form of a marking or inscription.

8. Method according to any of the preceding claims, wherein the liquid or viscoelastic medium (11) is removed from the light-scattering surface (9) after the marking or inscribing.

## Revendications

1. Procédé de formation de repères ou d'inscriptions sur une pièce (3) à l'aide d'un rayonnement riche en énergie, en particulier à l'aide d'un faisceau laser (1), la pièce (3) présentant une surface (9) diffusant la lumière et le matériau de la pièce (3) étant transparent à la longueur d'onde du rayonnement, une matrice polymère (7) étant disposée sur la pièce (3) de telle sorte que le rayonnement traverse la pièce (3) et sa surface (9) diffusant la lumière avant d'aboutir sur la matrice polymère (7),
**caractérisé en ce que**
la surface (9) diffusant la lumière de la pièce (3) est mouillée par un fluide (11) liquide ou viscoélastique.

2. Procédé selon la revendication 1, dans lequel le fluide (11) liquide ou viscoélastique présente un indice de réfraction similaire à celui du matériau de la pièce (3).

3. Procédé selon les revendications 1 ou 2, dans lequel le fluide (11) liquide ou viscoélastique ne présente pas d'absorption ou un degré d'absorption inférieur à 10 % dans la plage de longueur d'onde de 600 nm à 1 500 nm, le rayonnement utilisé étant compris dans la plage de longueur d'onde de 600 nm à 1 500 nm.

4. Procédé selon l'une des revendications précédentes, dans lequel la surface (9) diffusant la lumière est mouillée par une couche de fluide (11) liquide ou viscoélastique d'une épaisseur de 250 nm à 10 mm.

5. Procédé selon l'une des revendications précédentes, dans lequel le matériau de la pièce (3) est un substrat de verre qui ne présente pas d'absorption ou un degré d'absorption inférieur à 10 % dans la plage de longueur d'onde de 600 nm à 1 500 nm, le rayonnement utilisé étant compris dans la plage de 600 nm à 1 500 nm.

6. Procédé selon l'une des revendications précédentes, dans lequel la matrice polymère (7) est placée en contact avec une surface (5) de la pièce (3) qui est située face à la surface (9) diffusant la lumière.

7. Procédé selon l'une des revendications précédentes, dans lequel un enlèvement de matière est provoqué sur la matrice polymère (7) par le rayonnement, les produits ainsi dégagés se déposant sur la pièce (3) pour former le repère ou l'inscription.

8. Procédé selon l'une des revendications précédentes, dans lequel le fluide (11) de liquide viscoélastique est enlevé de la surface (9) diffusant la lumière après la formation du repère ou de l'inscription.
